# EUROPÄISCHE PATENTSCHRIFT

(11) **EP 3 287 642 B1**
(45) Veröffentlichungstag und Bekanntmachung des Hinweises auf die Patenterteilung: **01.05.2019**
(21) Anmeldenummer: 17185975.4
(22) Anmeldetag: 11.08.2017
(51) Int. Cl.: G01F 1/34, F04D 29/70, F04D 27/00

(54) **STRÖMUNGSGLEICHRICHTER EINES VENTILATORS**
FLOW CONDITIONER FOR FAN
REDRESSEUR D'ÉCOULEMENT D'UN VENTILATEUR

(30) Priorität: 23.08.2016 DE 102016115616
(43) Veröffentlichungstag der Anmeldung: 28.02.2018
(73) Patentinhaber: ebm-papst Mulfingen GmbH & Co. KG, 74673 Mulfingen (DE)
(72) Erfinder: HAAF, Oliver, 74635 Kupferzell (DE); HELI, Thomas, 74595 Langenburg (DE); GEBERT, Daniel, 74613 Öhringen (DE)
(74) Vertreter: Staeger & Sperling Partnerschaftsgesellschaft mbB

(56) Entgegenhaltungen:
- EP-A1- 0 887 555
- DE-A1-102015 113 147
- DE-U1-202014 105 284
- US-A1- 2013 045 085

## Beschreibung

Die Erfindung betrifft einen Strömungsgleichrichter eines Ventilators. Gattungsbildende Strömungsgleichrichter sind beispielsweise aus den Druckschriften des Stands der Technik EP 2 778 432 A1 und DE202014105284 bekannt.

In vielen Anwendungen der Luft- und Klimatechnik ist es notwendig, den geförderten Volumenstrom eines Gebläses bzw. Ventilators zu bestimmen bzw. konstant zu regeln. Darüber hinaus sind in derartigen Anwendungen die Anforderungen an ein möglichst geringes Ventilatorgeräusch hoch.

Herkömmlicherweise werden in der Luft- und Klimatechnik Trommelläufer-Ventilatoren eingesetzt, da sich diese auch unter gestörten Zuströmbedingungen durch ein gutes Geräuschverhalten auszeichnen. Die Volumenstrombestimmung ist bei Trommelläufer-Ventilatoren durch einen eindeutigen Zusammenhang zwischen Leistungsaufnahme und Volumenstrom bei konstanter Drehzahl möglich. Nachteilig ist jedoch der im Vergleich zu Radialventilatoren, insbesondere mit Gebläserädern mit rückwärts gekrümmten Schaufeln, relativ niedrige Wirkungsgrad.

Aufgrund gestiegener Effizienzanforderungen werden die Trommelläufer-Ventilatoren mehr und mehr von Radialventilatoren verdrängt. Bei diesen besteht jedoch kein eindeutiger Zusammenhang zwischen Leistungsaufnahme und Volumenstrom bei konstanter Drehzahl. Deshalb ist zur Bestimmung des geförderten Volumenstroms ein anderes Verfahren notwendig. Eine bekannte Lösung ist die Entnahme des statischen Drucks in der Einlaufdüse des Ventilators mit Hilfe einer Ringleitung. Mit diesem Verfahren lässt sich aus dem gemessenen statischen Druck direkt der Volumenstrom ermitteln. Typischerweise werden drei oder vier Druckentnahmestutzen über eine Leitung verbunden und mittels einer Schlauchleitung ein Drucksensor angeschlossen. Eine solche Schlauchleitung verursacht jedoch einen hohen Montageaufwand und mithin hohe Kosten.

Der Erfindung liegt deshalb die Aufgabe zugrunde, die Volumenstrommessung eines Ventilators durch Nutzung bereits verwendeter Bauteile zu vereinfachen und kostengünstig zu realisieren.

Diese Aufgabe wird durch die Merkmalskombination gemäß Patentanspruch 1 gelöst.

Erfindungsgemäß wird ein Strömungsgleichrichter in Form eines Vorleitgitters zur Anordnung an einem Ansaugbereich eines Ventilators mit einer axialen Anströmseite und einer axialen Abströmseite vorgeschlagen. Der Strömungsgleichrichter weist mehrere sich kreuzende Streben auf, die durch mindestens eine Umfangsstrebe und mindestens eine Radialstrebe gebildet sind. In zumindest einer der Streben ist ein Druckmesskanal ausgebildet, der mindestens eine zur Abströmseite weisende Öffnung aufweist. Der Druckmesskanal weist in einer ersten Ausführungsform ferner eine Messöffnung zum Anschluss einer Messleitung zur Verbindung mit einem Drucksensor auf. In einer alternativen Ausführung ist der Drucksensor in den Druckmesskanal integriert. Letztere Ausführung eignet sich vor allem für großdimensionierte Strömungsgleichrichter und entsprechend große Ventilatoren. Die Datenübertragung des integrierten Drucksensors kann über eine Signalleitung oder per Funk erfolgen.

Die Erfindung nutzt die physikalischen Eigenschaften der Ventilatorströmung, wonach vor und in der Zuströmdüse des Ventilators durch die hohe Strömungsgeschwindigkeit ein geringerer statischer Druck herrscht als im saugseitigen Fernfeld. In diesem Zuströmbereich wird der als Vorleitgitter ausgebildete Strömungsgleichrichter positioniert, insbesondere um die Geräuschbildung des Ventilators zu reduzieren.

In den Strömungsgleichrichter werden erfindungsgemäß die Mittel zur Volumenstrommessung integriert, so dass zusätzliche Bauteile und dadurch anfallende Kosten und Montageaufwand entfallen. Die Mittel zur Volumenstrommessung werden realisiert durch den in die Streben des Strömungsgleichrichters integrierten Druckmesskanal, der zur Abströmsseite, das heißt im bestimmungsgemäßen Einbau zum Ventilator weisend, kleine Öffnungen aufweist. Die von dem Ventilator erzeugte Strömung trifft zunächst anströmseitig auf die Streben des Strömungsgleichrichters, umströmt diese und tritt dann in die Einlaufdüse des Ventilators ein. Über die kleinen Öffnungen an den Streben auf der Abströmseite wird der statische Druck im Zuströmungsbereich des Ventilators in den Druckmesskanal übertragen, wo er durch den Drucksensor unmittelbar oder über eine Messleitung verbunden beabstandet zum Strömungsgleichrichter gemessen werden kann. Dieser gemessene statische Druck dient als Messgröße des Volumenstroms. Bei der Berechnung kann zusätzlich der Umgebungsdruck und mithin die geodätischen Einflüsse berücksichtigt werden, um ein exaktes Ergebnis des tatsächlichen Volumenstroms zu erhalten. Die gleichmäßigere Strömung und der Abbau von Zuströmturbulenzen durch den Strömungsgleichrichter verbessern zusätzlich die Messgenauigkeit des statischen Drucks am Strömungsgleichrichter.

Ebenfalls wirkt sich positiv auf das Messergebnis des statischen Drucks auf, wenn mehrere zur Abströmseite weisende Öffnungen vorgesehen werden, die auf den Streben gleichmäßig verteilt sind. Soweit die Öffnungen auf einer Umfangsstreben ausgebildet sind, ist ihr jeweiliger Abstand zueinander in Umfangsrichtung identisch.

In einer vorteilhaften Ausführungsvariante ist vorgesehen, dass der Druckmesskanal als umlaufender Ringkanal in mindestens einer Umfangsstrebe ausgebildet ist. Die Druckverteilung im Druckmesskanal ist dabei gleichmäßig. Besonders günstig ist eine Ausführung, bei der der Strömungsgleichrichter eine Vielzahl von Umfangsstreben aufweist und der Ringkanal in der radial äußersten Umfangsstrebe ausgebildet ist.

Zur gleichmäßigen Erfassung des statischen Drucks über den Umfang des Strömungsgleichrichters wird in einer Ausführungsform die zur Abströmseite weisende Öffnung als abschnittsweise oder vollständig umlaufender Schlitz ausgebildet. Selbst bei Verschmutzung von Teilen des Strömungsgleichrichters oder Kondensatbildung kann somit eine gesicherte Druckerfassung im Druckmesskanal sichergestellt werden.

Bei dem als Vorleitgitter ausgebildeten Strömungsgleichrichter ist in einer Ausführungsvariante mindestens eine Radialstrebe als Hohlstrebe mit einem Hohlraum ausgebildet und weist mindestens eine zur Abströmseite weisende Öffnung auf. Dabei kann auch hier eine Schlitzform gewählt werden. Die Öffnung an der bzw. den Radialstreben kann alternativ oder zusätzlich zu den Öffnungen bzw. dem Schlitz an der oder den Umfangsstreben vorgesehen werden.

In einer Weiterbildung ist der Strömungsgleichrichter dadurch gekennzeichnet, dass mehrere Radialstreben vorgesehen sind, die sich in ein axiales Zentrum des Strömungsgleichrichters erstrecken, wobei die Hohlräume jeder der Hohlstreben in dem axialen Zentrum verbunden sind. In dem axialen Zentrum ist an einer Verbindungsstelle der Hohlstreben ist die Messöffnung zum Anschluss der Messleitung und zur Messung des statischen Drucks im Druckmesskanal durch den Drucksensor ausgebildet.

Der Strömungsgleichrichter ist in einer Ausführungsform zweiteilig durch einen erstes Teilelement und ein zweites Teilelement ausgebildet. Hierdurch ist die Montage erleichtert. Zudem kann vorgesehen werden, dass der Druckmesskanal oder Ringkanal teilweise in dem ersten Teilelement und teilweise in dem zweiten Teilelement ausgebildet ist und durch Verbinden der ersten und zweiten Teilelemente einen durchgehenden Druckmessraum bildet.

Ferner ist eine Ausführung günstig, bei der die Messöffnung zur Aufnahme einer Schlauchleitung ausgebildet ist, die in Druckverbindung zu dem Drucksensor steht. In jeder Ausführungsvariante kann zum Anschluss der Messleitung an dem Strömungsgleichrichter ein mit dem Druckmesskanal verbundener Anschlussstutzen vorgesehen werden.

Die Erfindung umfasst ferner den Ventilator mit einem daran anströmseitig befestigten vorstehend beschriebenen Strömungsgleichrichter.

Sämtliche offenbarten Merkmale sind beliebig kombinierbar, soweit dies technisch möglich und nicht widersprüchlich ist. Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Draufsicht auf ein Ausführungsbeispiel eines Strömungsgelichrichters;
- Fig. 2: eine Schnittansicht A-A des Strömungsgelichrichters aus Fig. 1;
- Fig. 3: eine Schnittansicht C-C des Strömungsgelichrichters aus Fig. 1.

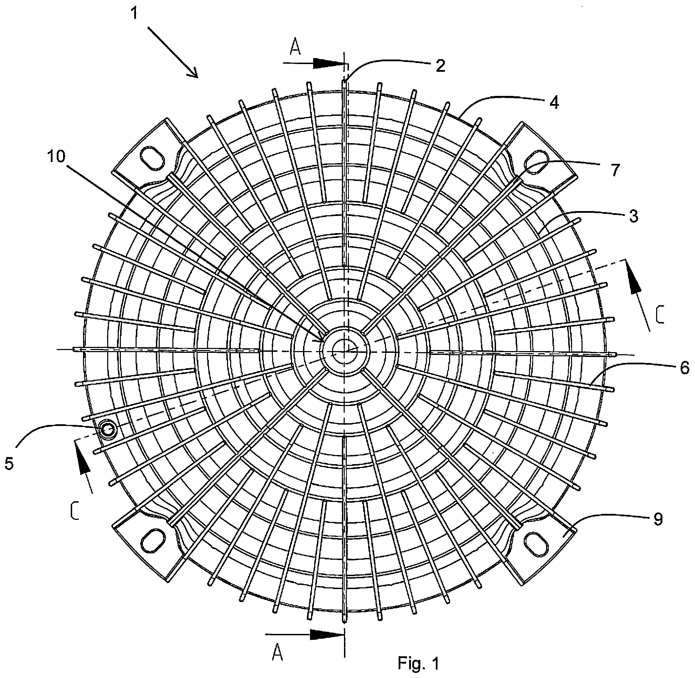

Gleiche Bezugszeichen benennen gleiche Teile in allen Ansichten. In den Figuren 1 bis 3 ist ein Ausführungsbeispiel eines als Vorleitgitter 1 ausgebildeten Strömungsgleichrichters zur befestigenden Anordnung am Ansaugbereich eines Ventilators in einer axialen Draufsicht auf die Anströmseite 20 dargestellt. Die Fixierung des Vorleitgitters 1 am nicht dargestellten Ventilator erfolgt mittels Schrauben über die vier Befestigungsflansche 9.

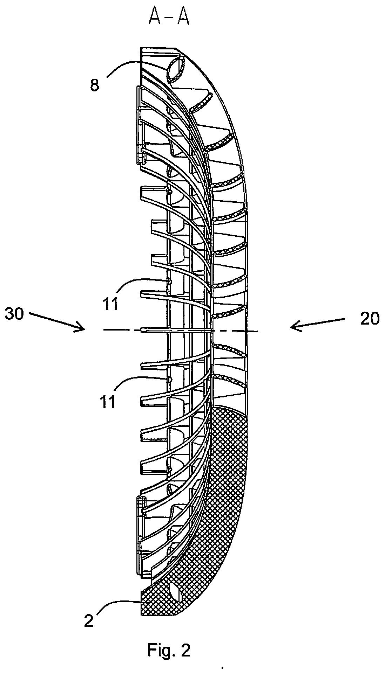

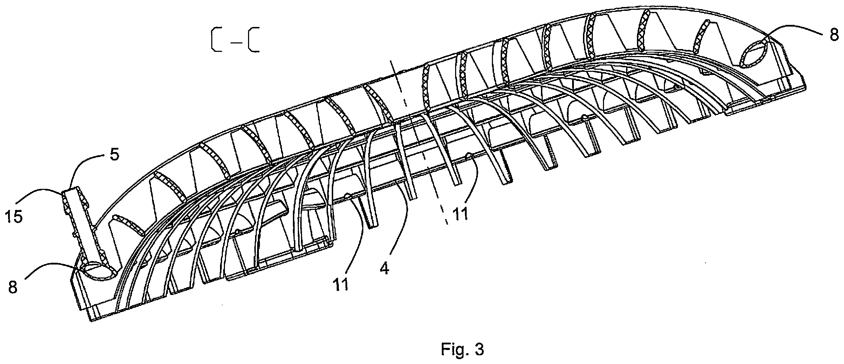

Das Vorleitgitter 1 weist eine Vielzahl von konzentrisch zueinander verlaufenden Umfangsstreben 3, 4 auf, die über eine Vielzahl unterschiedlich langer Radialstreben 6, 7 verbunden sind. In dem gezeigten Ausführungsbeispiel ist innerhalb der radial äußersten Umfangsstreben 4 der Druckmesskanal 8 ausgebildet und erstreckt sich um 360 Grad über deren gesamten Umfang und bildet dabei einen Ringkanal in der Umfangsstrebe 4. Wie in den Schnittansichten gemäß der Figuren 2 und 3 zu erkennen ist, sind an der Umfangsstrebe 4, in Umfangsrichtung im gleichen Abstand zueinander, mehrere zur Abströmseite 30 weisende Öffnungen 11 ausgebildet, die unmittelbar mit dem Druckmesskanal 8 in Verbindung stehen und mithin im Druckmesskanal 8 derselbe statische Druck vorliegt, wie im Bereich der Öffnungen 11. Die Umfangsstreben 3, 4 sind zur Rotationsachse hin geneigt, wobei die Öffnungen 11 am zur Abströmseite 30 weisenden Rand der Umfangsstrebe 4 ausgebildet sind. Auf der zur Anströmseite 20 weisenden Seite des Vorleitgitters 1 ist an dem Druckmesskanal 8 über eine einstückig an dem Vorleitgitter 1 ausgebildeten Anschlussstutzen 15 eine Messöffnung 5 mit direkter Verbindung zum Druckmesskanal 8 ausgebildet. Auf den Anschlussstutzen 15 kann ein Schlauch gesteckt werden, so dass der statische Druck im Druckmesskanal 8 beabstandet zum Vorleitgitter 1 mittels dem nicht dargestellten Drucksensor messbar ist.

Die vorstehend offenbarte Ausführungsvariante mit in eine Strebe integriertem Drucksensor ist auf das gezeigte Ausführungsbeispiel unmittelbar übertragbar, soweit die Dimensionierung der Umfangsstrebe 4 und mithin des Druckkanals 8 ausreichend groß ist.

In dem Ausführungsbeispiel gemäß den Figuren 1 - 3 sind ausschließlich in der Umfangsstrebe 4 Öffnungen 11 vorgesehen. In Abwandlung hierzu können in nicht gezeigten Ausführungsbeispielen entsprechende zur Abströmseite 30 weisende Öffnungen zusätzlich oder alterativ in den sich über die gesamte radial Länge erstreckenden Radialstreben 7 vorgesehen sein. Die Radialstreben 7 sind als Hohlstreben ausgebildet und bilden einen Hohlraum, der wiederum jeweils als Druckmesskanal dient. Im axialen Mittelbereich sind die Radialstreben 7 und ihre Hohlkanäle über ein hohles Ringelement 10 verbunden, so dass in allen Hohlräumen der gleiche statische Druck herrscht. Die Messöffnung 5 wird bei einer Ausführungsform mit einem Druckmesskanal nur in den Radialstreben 7 an das hohle Ringelement 10 verlagert. Die übrigen Merkmale sind identisch anwendbar.

## Patentansprüche

1. Strömungsgleichrichter zur Anordnung an einem Ansaugbereich eines Ventilators, mit einer axialen Anströmseite (20) und einer axialen Abströmseite (30), wobei der Strömungsgleichrichter mehrere sich kreuzende Streben aufweist, die durch mindestens eine Umfangsstrebe (3, 4) und mindestens eine Radialstrebe (6, 7) gebildet sind, **dadurch gekennzeichnet, dass** zumindest in einer der Streben ein Druckmesskanal (8) ausgebildet ist, der mindestens eine zur Abströmseite (30) weisende Öffnung (11) aufweist, und wobei der Druckmesskanal (8) eine Messöffnung (5) zum Anschluss einer Messleitung zur Verbindung mit einem Drucksensor aufweist oder in den Druckmesskanal (8) ein Drucksensor integriert ist.

2. Strömungsgleichrichter nach Anspruch 1, **dadurch gekennzeichnet, dass** mehrere zur Abströmseite (30) weisende und gleichmäßig verteilte Öffnungen (11) vorgesehen sind.

3. Strömungsgleichrichter nach Anspruch 1 oder 2, **dadurch gekennzeichnet, dass** der Druckmesskanal (8) als umlaufender Ringkanal in der mindestens einen Umfangsstrebe (3, 4) ausgebildet ist.

4. Strömungsgleichrichter nach dem vorigen Anspruch, **dadurch gekennzeichnet, dass** er eine Vielzahl von Umfangsstreben (3, 4) aufweist und der Ringkanal in der radial äußersten Umfangsstrebe (4) ausgebildet ist.

5. Strömungsgleichrichter nach einem der vorigen Ansprüche 3 bis 4, **dadurch gekennzeichnet, dass** die zur Abströmseite (30) weisende mindestens eine Öffnung (11) als abschnittsweise oder vollständig umlaufender Schlitz ausgebildet ist.

6. Strömungsgleichrichter nach einem der vorigen Ansprüche, **dadurch gekennzeichnet, dass** die mindestens eine Radialstrebe (6, 7) als Hohlstrebe mit einem Hohlraum ausgebildet ist und die mindestens eine zur Abströmseite (30) weisende Öffnung (11) aufweist.

7. Strömungsgleichrichter nach dem vorigen Anspruch, **dadurch gekennzeichnet, dass** mehrere Radialstreben (6, 7) vorgesehen sind, die sich in ein axiales Zentrum des Strömungsgleichrichters erstrecken, wobei die Hohlräume jeder der Radialstreben (6,7) in dem axialen Zentrum verbunden sind, und wobei in dem axialen Zentrum an einer Verbindungsstelle der Radialstreben (6, 7) die Messöffnung (5) ausgebildet ist.

8. Strömungsgleichrichter nach einem der vorigen Ansprüche, **dadurch gekennzeichnet, dass** er zweiteilig durch einen erstes Teilelement und ein zweites Teilelement ausgebildet ist.

9. Strömungsgleichrichter nach dem vorigen Anspruch, **dadurch gekennzeichnet, dass** der Druckmesskanal (8) oder Ringkanal teilweise in dem ersten Teilelement und teilweise in dem zweiten Teilelement ausgebildet ist und durch Verbinden der ersten und zweiten Teilelemente einen durchgehenden Druckmessraum bildet.

10. Strömungsgleichrichter nach einem der vorigen Ansprüche, **dadurch gekennzeichnet, dass** die Messöffnung zur Aufnahme einer Schlauchleitung ausgebildet ist, die in Druckverbindung zu dem Drucksensor steht.

11. Ventilator mit einem daran anströmseitig befestigten Strömungsgleichrichter nach einem der vorigen Ansprüche.

## Claims

1. A current rectifier for being arranged at an intake region of a fan, having an axial inflow side (20) and an axial outflow side (30),
said current rectifier comprising a plurality of intersecting struts formed by at least one circumferential strut (3, 4) and at least one radial strut (6, 7), **characterized in that** a pressure measuring channel (8) having at least one opening (11) facing the outflow side (30) is formed in at least one of the struts,
and wherein the pressure measuring channel (8) has a measuring opening (5) for connecting a measuring line for connection to a pressure sensor or a pressure sensor is integrated in the pressure measuring channel (8).

2. Current rectifier according to Claim 1, **characterized in that** a plurality of uniformly distributed openings (11) pointing towards the outflow side (30) are provided.

3. Current rectifier according to claim 1 or 2, **characterized in that** the pressure measuring channel (8) is formed as a circumferential annular channel in the at least one circumferential strut (3, 4).

4. Current rectifier according to the preceding claim, **characterized in that** it has a plurality of circumferential struts (3, 4) and the annular channel is formed in the radially outermost circumferential strut (4).

5. Current rectifier according to one of the preceding claims 3 to 4, **characterized in that** the at least one opening (11) pointing to the outflow side (30) is formed as a slot circumferential in sections or completely.

6. Current rectifier according to one of the preceding claims, **characterized in that** the at least one radial strut (6, 7) is formed as a hollow strut having a cavity and having the at least one opening (11) facing the outflow side (30).

7. Current rectifier according to the preceding claim, **characterized in that** a plurality of radial struts (6, 7) are provided, extending into an axial centre of the flow conditioner, the cavities of each of the radial struts (6, 7) being connected in the axial centre, and the measuring opening (5) is formed in the axial centre at a connecting point of the radial struts (6, 7).

8. Current rectifier according to one of the preceding claims, **characterized in that** it is formed in two parts by a first subcomponent and a second subcomponent.

9. Current rectifier according to the preceding claim, **characterized in that** the pressure measuring channel (8) or annular channel is formed partly in the first subcomponent and partly in the second subcomponent and forms a continuous pressure measuring space by connecting the first and second subcomponents.

10. Current rectifier according to one of the preceding claims, **characterized in that** the measuring opening is formed to receive a hose line being in pressure connection with the pressure sensor.

11. A fan having a current rectifier attached to it on the inflow side according to one of the preceding claims.

## Revendications

1. Redresseur d'écoulement pour l'agencement au niveau d'une zone d'aspiration d'un ventilateur, avec un côté entrée axial (20) et un côté sortie axial (30), dans lequel le redresseur d'écoulement présente plusieurs entretoises qui se croisent, qui sont formées d'au moins une entretoise circonférentielle (3, 4) et d'au moins une entretoise radiale (6, 7), **caractérisé en ce qu'**un canal de mesure de pression (8), qui présente au moins une ouverture (11) dirigée vers le côté sortie (30), est réalisé au moins dans une des entretoises et dans lequel le canal de mesure de pression (8) présente une ouverture de mesure (5) pour le branchement d'une conduite de mesure pour la liaison à un capteur de pression ou un capteur de pression est intégré dans le canal de mesure de pression (8).

2. Redresseur d'écoulement selon la revendication 1, **caractérisé en ce que** plusieurs ouvertures (11) dirigées vers le côté sortie (30) et uniformément réparties sont prévues.

3. Redresseur d'écoulement selon la revendication 1 ou 2, **caractérisé en ce que** le canal de mesure de pression (8) est réalisé en tant que canal annulaire circonférentiel dans l'au moins une entretoise circonférentielle (3, 4).

4. Redresseur d'écoulement selon la revendication précédente, **caractérisé en ce qu'**il présente une pluralité d'entretoises circonférentielles (3, 4) et le canal annulaire est réalisé dans l'entretoise circonférentielle radialement la plus à l'extérieur (4).

5. Redresseur d'écoulement selon l'une quelconque des revendications précédentes 3 à 4, **caractérisé en ce que** l'au moins une ouverture (11) dirigée vers le côté sortie (30) est réalisé en tant que fente circonférentielle entièrement ou par section.

6. Redresseur d'écoulement selon l'une quelconque des revendications précédentes, **caractérisé en ce que** l'au moins une entretoise radiale (6, 7) est réalisée en tant qu'entretoise creuse avec une cavité et présente l'au moins une ouverture (11) dirigée vers le côté sortie (30).

7. Redresseur d'écoulement selon la revendication précédente, **caractérisé en ce que** plusieurs entretoises radiales (6, 7) sont prévues, qui s'étendent dans un centre axial du redresseur d'écoulement, dans lequel les cavités de chacune des entretoises radiales (6, 7) sont reliées dans le centre axial, et dans lequel l'ouverture de mesure (5) est réalisée dans le centre axial à un point de liaison des entretoises radiales (6, 7).

8. Redresseur d'écoulement selon l'une quelconque des revendications précédentes, **caractérisé en ce qu'**il est réalisé en deux parties par un premier élément partiel et un deuxième élément partiel.

9. Redresseur d'écoulement selon la revendication précédente, **caractérisé en ce que** le canal de mesure de pression (8) ou canal annulaire est réalisé en partie dans le premier élément partiel et en partie dans le deuxième élément partie et forme par liaison des premier et deuxième éléments partiels un espace de mesure de pression continu.

10. Redresseur d'écoulement selon l'une quelconque des revendications précédentes, **caractérisé en ce que** l'ouverture de mesure est réalisée pour la réception d'une conduite flexible, qui est en relation de pression avec le capteur de pression.

11. Ventilateur avec un redresseur d'écoulement qui y est fixé côté entrée selon l'une quelconque des revendications précédentes.
